# EUROPEAN PATENT SPECIFICATION

(11) **EP 2 289 013 B1**
(45) Date of publication and mention of the grant of the patent: **19.09.2018**
(21) Application number: 08767199.6
(22) Date of filing: 19.06.2008
(51) Int. Cl.: G06F 21/00, H04L 29/06, H04L 9/08

(54) **A METHOD AND A DEVICE FOR PROTECTING PRIVATE CONTENT**
VERFAHREN UND EINRICHTUNG ZUM SCHUTZ VON PRIVATEM INHALT
PROCÉDÉ ET DISPOSITIF POUR PROTÉGER UN CONTENU PRIVÉ

(43) Date of publication of application: 02.03.2011
(73) Proprietor: Telefonaktiebolaget LM Ericsson (publ), 164 83 Stockholm (SE)
(72) Inventor: BLOM, Rolf, S-175 68 Järfälla (SE); DAHLIN, Steinar, S-175 52 Järfälla (SE); SELANDER, Göran, S-168 34 Bromma (SE)
(74) Representative: Brann AB
(86) International application number: PCT/SE2008/050733
(87) International publication number: WO 2009/154526

(56) References cited:
- EP-A2- 1 598 728
- WO-A1-2007/114657
- US-A1- 2005 132 207
- MILAN PETKOVIC ET AL: "Digital Inheritance of Personal and Commercial Content Using DRM", CONSUMER COMMUNICATIONS AND NETWORKING CONFERENCE, 2007. CCNC 2007. 20 07 4TH IEEE, IEEE, PI, 1 January 2007 (2007-01-01), pages 950-954, XP031087923, ISBN: 978-1-4244-0667-8
- "OMA DRM v2.0 Extensions for Broadcast Support ; OMA-TS-DRM_XBS-V1_0-20080609-C", OMA-TS-DRM_XBS-V1_0-20080609-C, OPEN MOBILE ALLIANCE (OMA), 4330 LA JOLLA VILLAGE DR., SUITE 110 SAN DIEGO, CA 92122 ; USA , no. 1.0 9 June 2008 (2008-06-09), pages 1-206, XP064032280, Retrieved from the Internet: URL:ftp/Public_documents/BCAST/Permanent_d ocuments/ [retrieved on 2008-07-01]
- PARK H ET AL: "Copyright Protection for Modifiable Digital Content Based on Distributed Environment", IEICE TRANSACTIONS ON INFORMATION AND SYSTEMS, INFORMATION & SYSTEMS SOCIETY, TOKYO, JP, vol. E91D, no. 5, 1 May 2008 (2008-05-01), pages 1390-1397, XP001553531, ISSN: 0916-8532, DOI: 10.1093/IETISY/E91-D.5.1390
- GYORGY KALMAN ET AL: 'Right Management Infrastructure for Home Content' IEEE XPLORE 18 February 2009, XP031132552
- MOHSEN SHARIFI ET AL: 'SLDRM: A Self Local License Digital Rights Management System' 2008 SECOND IEEE INTERNATIONAL CONFERENCE ON DIGITAL ECOSYSTEMS AND TECHNOLOGIES (IEEE DEST 2008) 2008, XP031328706

## Description

### TECHNICAL FIELD

The present invention relates generally to a method and a User Equipment for controlling distribution and consumption of Digital Rights Management (DRM) protected private content. In particular, a mechanism is provided which allows a user of a specially adapted User Equipment to generate DRM protected private content and to issue usage rights for that content locally, relying on existing DRM infrastructure.

### BACKGROUND

DRM normally represents a mechanism for controlling access to, and usage of, digital data, such as, e.g. software, music, movies or hardware, which may be implemented into a network using any of several available technologies. Such a DRM mechanism may be used by e.g. content providers, publishers or copyright owners wanting to apply usage restrictions associated with a specific instance of a digital work. DRM is a vast area which may involve many different components, including asset management, such as, e.g. packaging, identification, encryption, watermarking and tracking, rights management, such as, e.g. rights creation, association to content, licensing, and other areas, such as, e.g. trading and payments. A deployment of a DRM system, with users, possessing rights to access or use the digital data on their own User Equipments (UEs), typically also involves technical protection measures to prevent the user from exceeding the access or usage rights, such as, e.g. cryptography, tamper resistant hardware, software security etc. Cryptography is typically invoked when encrypting or integrity protecting content during transport, as well as together with identification schemes to ensure that the right content and license are used on a legitimate UE. Hardware support, configured e.g. as tamper resistant DRM modules, is part of the legitimate UE to secure the identification of the UE, and together with software obfuscation, also to secure the implementation of the DRM system.

A common implementation of a DRM system involves a separation of content and associated rights. This enables the same media content to be used according to different sets of rights and a specific rights trading business model, where a Rights Issuer (RI) can package and sell or offer usage rights, typically packaged as a Rights Object (RO), associated with the respective media content for a specific legitimate UE or for a group of UEs. Various security measures are usually taken in an attempt to protect the confidentiality of the content and to enforce the binding between content and a rights object in order to prevent unauthorized rendering of the content.

Open Mobile Alliance (OMA) DRM is a DRM system developed by the Open Mobile Alliance. Two versions of OMA DRM have been released, wherein OMA DRM version 1 is a basic DRM standard for introducing DRM without offering any strong protection of content or ROs delivered to the UEs. In OMA DRM version 1 the content is encrypted with a Content Encryption Key (CEK), but the CEK is included in the RO in clear text and the RO is not cryptographically protected during transport.

OMA DRM version 2 is a major extension of version 1, providing a separate delivery mechanism, wherein, in particular, the CEK is encrypted and each RO is protected for one receiving UE, or group of UEs. OMA DRM version 2 is based on public key cryptography. Each UE and RI has public and private key pairs for authentication, encryption and integrity protecting communication, and the public keys are certified by a trusted Certificate Authority (CA). Within groups of UEs, content is protected with a symmetric key shared between the UEs in the group. More information on OMA DRM can be retrieved from "OMA Digital Rights Management" V2.1, 2007-10-18.

DRM protection mechanisms are typically developed for handling encrypted content. Such content can only be rendered when a RO, containing one or more encryption keys and permissions, indicating how and when the media content can be rendered, has been provided to the UE of the rendering user. The RO also contains an RO identifier, the identifier of the RI (RI ID) and a signature of the RO, made by the private key of the RI.

An RO can be bound to one single UE, defining a Device Rights Object (Device RO), or to a group of UEs, defined in OMA DRM version 2 as a domain which is represented by a registered set of UEs that are allowed to use Domain ROs. Domain ROs can be used by any device enrolled in a respective domain, whereas a device RO is usable only by one dedicated device, or UE.

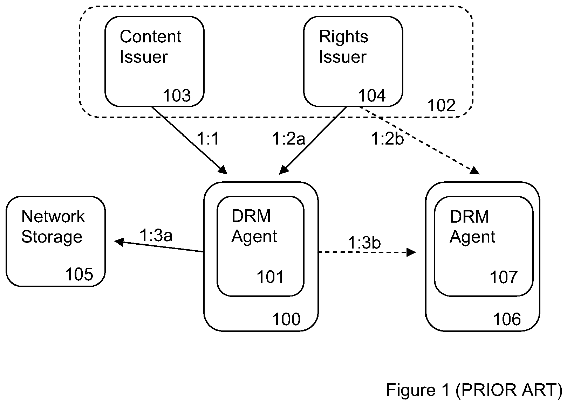

A general functional architecture of a DRM system according to the prior art will now be described with reference to figure 1. A UE **100**, which may be stationary or mobile, comprises a trusted entity, referred to as a DRM agent **101**, which is adapted to provide DRM functionality to the UE 100. The DRM agent 101, which may be implemented as hardware, software or a combination thereof, is responsible for enforcing permissions and constraints associated with DRM protected content, and for controlling access to the DRM protected content provided from a content provider (CP) **102** according to rules and constraints specified for the respective DRM content in an associated Rights Object (RO). Without an associated RO, DRM content cannot be used by the user. The user of UE 100 may access DRM content, e.g. by selecting a preview trial version or a full version, associated with some kind of restriction as to the use of the accessible content, by browsing a Content Issuer (CI) **103** of the CP 102.

When content to be retrieved from CP 102 has been identified as DRM protected content by an application in the UE 100, the DRM agent 101 of UE 100 is invoked. In a first **step 1:1**, the selected content is forwarded from CI 103 to the DRM agent 101. DRM protection of the selected content requires that it is encrypted with the symmetric content encryption key (CEK).

In order for the user of UE 100 to get access to the delivered DRM content, the DRM agent 101 requests for an RO associated with the required DRM content from a Rights Issuer (RI) **104** of the content provider 102 in a next **step 1:2a.** Although presented as two separate entities, it is to be understood that the CI 103 and RI 104, logically and/or physically, may be implemented as one single entity, e.g. as a CP from where both content and an associated RO may be retrieved. Typically, the RI is located by interrogating the DRM content header, containing an RI URL, pointing at the appropriate RI portal.

A DRM agent, is provided with a unique cryptographic key pair, i.e. a public key, a corresponding private key, and a certificate, signed by a DRM licensing organization, which allows a CI and an associated RI to securely authenticate the DRM agent, using any standard Private Key Infrastructure (PKI) procedures. In particular, the authentication protocol typically contains the RI public key certificate and other certificates constituting a certificate chain from the RI up to a trusted root CA public key of the DRM agent. In addition to usage rights information, the RO, which typically is an XML document, contains one or more cryptographic keys, and/or other data which might be needed to decrypt and verify the integrity of the DRM content. In OMA DRM version 2, a device RO contains the CEK, encrypted by the receiving DRM agent public encryption key.

Furthermore, a RO is digitally signed by the RI, and the signature is included in the RO. Since the RO is signed, data, such as a cryptographic hash of the content contained in the RO, can be integrity protected, and hence used to verify the integrity of the content itself.

Device and domain ROs are very similar, but differ in how certain keys, such as the CEK, are protected, whether using a device public key or a symmetric domain key.

When the requesting DRM agent 101 in figure 1 has been authenticated, sensitive parts of the RO, such as, e.g. the one or more cryptographic keys, associated with the delivered DRM content, are encrypted with the public key of the requesting DRM agent 101, prior to delivery. The RO, now cryptographically bound to the DRM agent 101, may be transported to the DRM agent 101 of UE 100, using any available transport mechanism, such as e.g. HTTP/WSP, WAP Push or MMS. OMA DRM version 2, uses the transport independent Rights Object Acquisition Protocol (ROAP) for the signaling between a UE and a RI. At the DRM agent 101, the DRM content is parsed, enabling a user to render the associated DRM content according to the usage rules and constraints specified in the decrypted content of the retrieved RO.

Since DRM content can only be accessed with a valid RO, protected DRM content may be freely distributed from one UE to other UEs. This enables, for example super distribution, allowing users to freely pass DRM content between them. DRM content delivered to UE 100 may, e.g. be forwarded to, and stored in a Network Storage **105**, such as, e.g., a removable, or stationary media storage. This is illustrated with an optional **step 1:3a.** In another optional **step 1:3b**, DRM agent 101, may distribute retrieved DRM content to another UE **106**, which also comprises a DRM agent **107.** To be able to access the DRM content provided from UE 100, however, the DRM agent 107 of UE 106 has to request for a new RO from RI 104. This is done in a **step 1:2b.** RI 104 authenticates the DRM agent 107 and determines whether or not an RO is to be provided to UE 106 and its associated DRM agent 107. If the RO is provided to DRM agent 107, also the user of UE 106 will be able to gain access to the DRM content. Whether the DRM agent 107 gains full or limited access to the DRM content all depends on the instructions of the retrieved RO, i.e. the RO which is delivered to DRM agent 107 may not necessarily be identical to the RO which was initially provided to DRM agent 101.

As mentioned above, content may be distributed not only to a single UE but to a group of UEs that are enrolled in a domain, which is created, managed and administered by a RI. Once a domain has been defined and two or more UEs are enrolled in the domain, content and associated rights distributed to any of the UEs registered in the domain may be shared among the UEs of the domain without requiring any additional signaling between a respective UE and the RI.

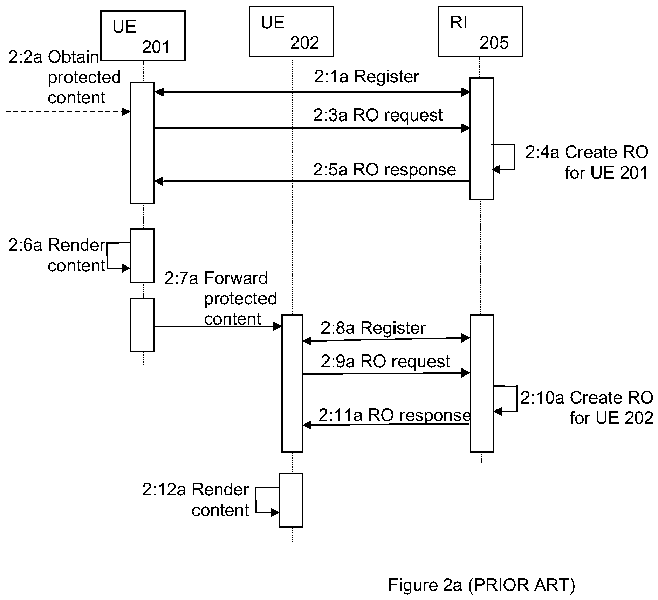

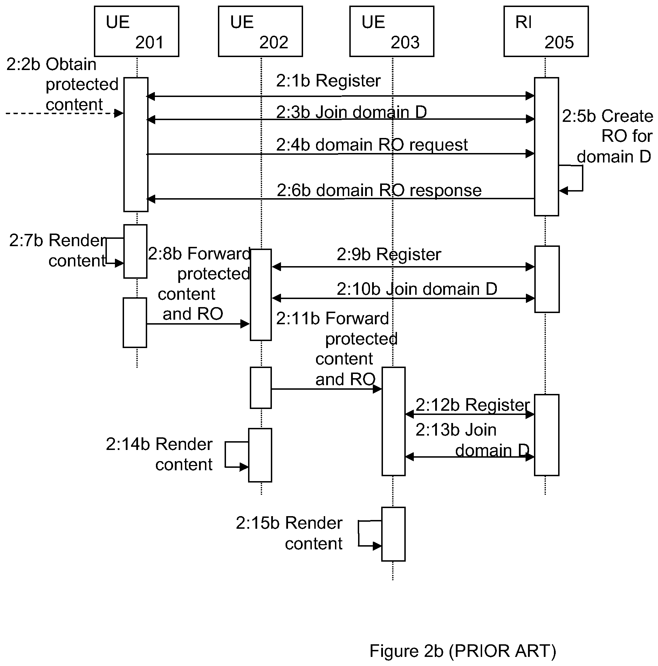

Figure 2a schematically illustrates a DRM protection mechanism implemented in an OMA DRM system, according to the prior art that enables rendering of DRM protected content at a UE, while figure 2b illustrates a similar mechanism which enables rendering of DRM protected content at a UE belonging to a domain.

Although not shown in the figures, all UEs comprise a DRM agent, each of which are operating according to the present OMA DRM standards, and, thus, it is to be understood that all the described communication steps between the RI and the UEs of figures 2a and 2b, are in fact executed between the DRM agent of the respective UE and the RI.

In a first **step 2:1a** of figure 2a, a UE **201** locates a RI **205** of interest and registers with it, and obtains DRM protected content from a trusted source (not shown), as indicated with another **step 2:2a.** The registration protocol involves a mutual authentication of the RI and the DRM Agent of UE 201, wherein RI 205 supplies a relevant certificate chain, comprising a public key certificate, signed with the private key of a CA, to UE 201. Optionally also various other operations for verifying the legitimacy of the respective other party may be executed at this stage.

A successful registration results in an authorisation of the DRM Agent as a legitimate entity by the RI, and v.v. At the DRM Agent this is manifested by the storage of an RI context for the relevant RI, the RI context comprising RI identity (RI ID), RI certificate/certificate chain, algorithms and other information.

In another **step 2:3a**, UE 201 requests an RO from RI 205. The RO is created and signed with the private key of the RI in a subsequent **step 2:4a**, and transmitted to UE 201 in a next **step 2:5a**, comprising a signature that proves that the RO is issued by RI 205.

The UE 201 may now render the DRM protected content on the basis of the content of the retrieved RO, as indicated with a **step 2:6a.**

The protected content may be distributed further by the user of UE 201 to other UEs. In figure 2a this is illustrated with UE 201 forwarding content to UE 202, as indicated with a subsequent **step 2:7a.** It is, however, to be understood that, alternatively, 2:7a may be performed prior to step 2:6a. In order for UE 202 to be able to render the protected content it will have to retrieve a relevant RO. Therefore UE 202 performs the same procedure as described above, starting with registering with RI 205, as indicated with a **step 2:8a,** and requesting and retrieving an RO, as indicated in subsequent **steps 2:9a-2:11a.** With the relevant rights, UE 202 can now render the protected content as indicated with a final **step 2:12a.**

In an alternative embodiment, illustrated with figure 2b, it is described how DRM protected content can be rendered by a plurality of UEs by implementing the domain concept. According to this embodiment a registration procedure, identical with the one executed in **step 2:1a** in figure 2a is performed in a first step 2:1b. DRM protected content is obtained from an external source (not shown) in a next step 2:2b.

The user of UE 201 wanting to join a domain D initiates a join domain procedure with RI 205 in a next **step 2:3b**, resulting in UE 201 joining domain D, and the creation and forwarding of an associated Domain Context to UE 201. The Domain Context consists of information necessary for UE 201 when processing domain ROs, such as e.g. Domain Key, Domain Identifier and Expiry Time.

In a subsequent **step 2:4b** UE 201 requests a domain RO which will continue rights for UEs of domain D to render specific DRM protected content. The domain RO is created in a **step 2:5b**, and provided to UE 201 in a subsequent **step 2:6b.** Each domain RO defines limitations for the use of the associated DRM protected content for a UE enrolled with the domain.

Both in figure 2a and 2b DRM protected content, which has been created by an associated CI prior to the creation of the respective RO, may be rendered by UE 201 at any time subsequent to having retrieved the RO, if this is permitted according to the RO. Such a rendering procedure is indicated with a subsequent **step 2:7b.**

At a later occasion the user of UE 201 may want to share the protected content with other UEs. In the figure this is illustrated with another **step 2:8b**, wherein the DRM protected content rendered at UE 201 is forwarded to UE 202 together with the relevant domain RO. In order to be able to render the content, UE 202 registers with RI 205 in another **step 2:9b**, and joins domain D in yet another **step 2:10b.** Since UE 202 is now enrolled in domain D, this UE possess a corresponding Domain Context and will be able to use the retrieved DRM protected content at once, without having to contact RI 205.

The user of UE 202 may choose to distribute the protected content and the associated domain RO to yet another UE 203, as indicated with a **step 2:11b.** At UE 203, rendering of the protected content may be performed once UE 203 has registered with RI 205, as indicated with a **step 2:12b**, and has joined domain D, as indicated with another **step 2:13b.** The user of UE 202 and 203, may choose to render the protected content at any occasion subsequent to step 2:10b and 2:13b, respectively. In the figure, rendering is indicated with a **step 2:14b** and **step 2:15b**, respectively.

The common DRM setting described above with reference to figure 2a shows how legitimate usage of copyright protected content may be managed for a single UE, while, given the consent of the content provider, figure 2b shows how protected content may be shared among UEs registered within a specified domain.

Patent publication WO 2007/114657 A1 describes a method for sharing rights object in digital rights management and device thereof.

Non-patent literature "Digital Inheritance of Personal and Commercial Content Using DRM" (MILAN PETKOVIC ET AL.), CONSUMER COMMUNICATIONS AND NETWORKING CONFERENCE, 2007. CCNC 2007. 20 07 4TH IEEE, IEEE, PI, 1 January 2007 (2007-01-01), pages 950-954, XP031087923, ISBN: 978-1-4244-0667-8. This non-patent literature describes methods for digital inheritance of personal content through use of ownership and usage licenses.

Standards document "OMA DRM v2.0 Extensions for Broadcast Support ; OMA-TS DRM XBS-V1 0-20080609-C", OMA-TS-DRM_XBS-V1_0-20080609-C, OPEN MOBILE ALLIANCE (OMA), 4330 LA JOLLA VILLAGE DR., SUITE 110 SAN DIEGO, CA 92122; USA, no. 1.09 June 2008 (2008-06-09), pages 1-206, XP064032280, is a Digital Rights Management (DRM) system in which each participating device has an individual DRM Public key infrastructure (PKI) certificate, with a public key and the corresponding private key.

There are, however, no standardised DRM solutions which allow the users of these UEs to use DRM protection on their own private content.

Consequently, there is also no mechanism available 5 which enables a user to control the distribution and use of private DRM protected content.

In addition, becoming a legitimate OMA DRM RI is a time consuming and costly process, which may be hard to afford for small and/or local content providers, and, thus, an alternative method for managing and to distributing DRM protected content would therefore be appreciated.

### SUMMARY

It is an object of the present invention to address at least some of the problems mentioned above.

A method is provided which enables a user to control the distribution and consumption of Digital Rights Management (DRM) protected private content locally from a User Equipment. In particular, the method allows a user of a specially adapted User Equipment to generate DRM protected private content and to issue usage rights for that content locally, relying on existing DRM infrastructure.

According to one aspect, a method of enabling Digital Rights Management (DRM) protection of content in a communications network supporting a DRM system is provided. A specially adapted user equipment, referred to as a Rights Management User Equipment (RMUE) is registering with a first rights issuer of the DRM system. The RMUE also retrieves a delegate assertion, which is a public key certificate of the RMUE, signed by the first rights issuer with a private key of the first rights issuer, for authorizing the first user equipment to become a private rights issuer of the DRM system, from the first rights issuer. In addition, the RMUE retrieves a first rights object from the first rights issuer. The first rights object is signed by the first rights issuer and comprises a first set of rights for the RMUE to DRM protect private content locally on the RMUE, and to issue at least one second rights object, associated with the private content. The RMUE obtains private content, and applies DRM protection on the private content, according to at least the first set of rights, obtained from the first rights object.
In a next step, RMUE may create, according to at least the first set of rights in combination with predetermined rights being entered by the RMUE, a second rights object, defining a second set of rights for rendering the private content,. Once the private content has been protected accordingly, the RMUE may transmit the second rights object to a second user equipment. The second user equipment will be able to render the private content on the basis of at least the second rights object once it has acquired the private content, the delegate assertion and a decryption key. The private content may be acquired either from the first user equipment or from a server, where the private content has been stored previously.

The RMUE may also perform a registration of the second user equipment, wherein the delegate assertion is provided to the second user equipment as part of the registration procedure.

According to one embodiment, a domain context, managed by the first rights issuer, is requested from the first rights issuer. The domain context is specifying rules for the rendering of protected content by the second user equipment, enrolled in a domain, and specified by the domain context.

According to another embodiment, a domain context is instead generated by the RMUE, after which the RMUE can enrol a second user equipment in a domain associated with the domain context.

According to yet another embodiment, the second rights object is instead a private domain child rights object, and the corresponding domain parent rights object is signed by the first rights object. In such a scenario the delegate assertion may be the corresponding parent rights object, wherein the parent rights object comprises the public key of the first rights issuer. Alternatively, the delegate assertion may be a public key certificate of the first user equipment, signed by the first rights issuer. The described DRM system is typically an OMA DRM system.

The claimed invention also refers to a RMUE, adapted to perform the method according to any of the embodiments described above.

The introduction of the described DRM mechanism, enables a user to control DRM protected private content and how this content is used in a more flexible way. A user can select who should be allowed to render the private content, as well as to what extent such rendering should be allowed.

### BRIEF DESCRIPTION OF THE DRAWINGS

The present invention will now be described in more detail by means of exemplary embodiments and with reference to the accompanying drawings, in which:
- Figure 1 schematically illustrates an architecture of a Digital Rights Management (DRM) system, according to the prior art.
- Figure 2a schematically illustrates a signalling diagram for distribution of DRM protected content to, and between UEs, according to the prior art.
- Figure 2b schematically illustrates another signalling diagram for distribution of DRM protected content to and between UEs enrolled into a domain, according to the prior art.
- Figure 3 is a signalling diagram showing how a Rights Management UE generates and distributes DRM protected private content, according to one embodiment.
- Figure 4 is a signalling diagram showing how a Rights Management UE generates and distributes DRM protected private content to UEs enrolled in a domain, according to one embodiment.
- Figure 5 is a signalling diagram showing how a Rights Management UE generates and distributes DRM protected private content to UEs enrolled in a domain, according to another embodiment.
- Figure 6 schematically is a signalling diagram showing how a Rights Management UE generates and distributes DRM protected private content to UEs enrolled in a domain, according to yet another embodiment.
- Figure 7 schematically illustrates a Rights Management UE, adapted to operate in accordance with any of the described embodiments.

### DETAILED DESCRIPTION

Briefly described, the present invention relates to a mechanism for allowing DRM protection of private content, thereby allowing a user of a specially adapted UE to control the distribution to, and use of the protected private content at another UE. More specifically the suggested mechanism enables a user to issue and distribute ROs, referred to as private ROs, using the existing OMA DRM infrastructure as a platform. The present invention also relates to a modified UE, from hereinafter referred to as a Rights Management User Equipment (RMUE), specially adapted for implementation of the proposed DRM protection mechanism, wherein the user of such a RMUE will be able to maintain control of the use and distribution of private content.

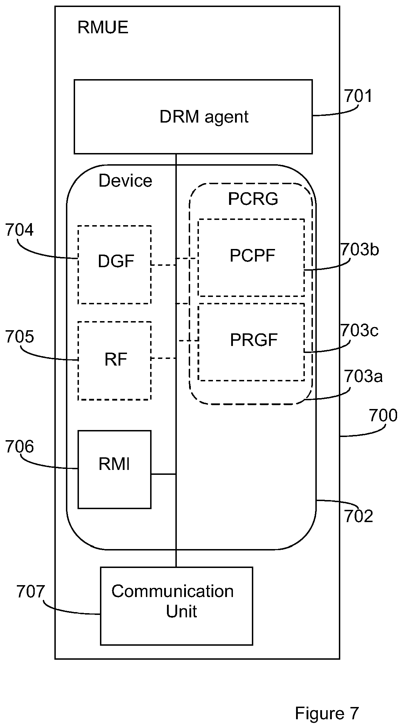

Since registered OMA DRM compliant UEs are able to render DRM protected content according to rules and constraints specified in an acquired RO, one key feature with the claimed invention is to reuse this function also on ROs defining rights for private content issued by a user of a RMUE. The claimed invention relies on two new pieces of data which are hereby introduced, namely a delegation RO, having the purpose of giving the RMUE permission to issue rights in a DRM system, and a delegate assertion that the RMUE obtains from a RI. The RMUE utilises the delegate assertion to prove to other UEs that it is allowed to issue rights in the DRM system. A RMUE according to one exemplified configuration will be described in further detail with reference to figure 7.

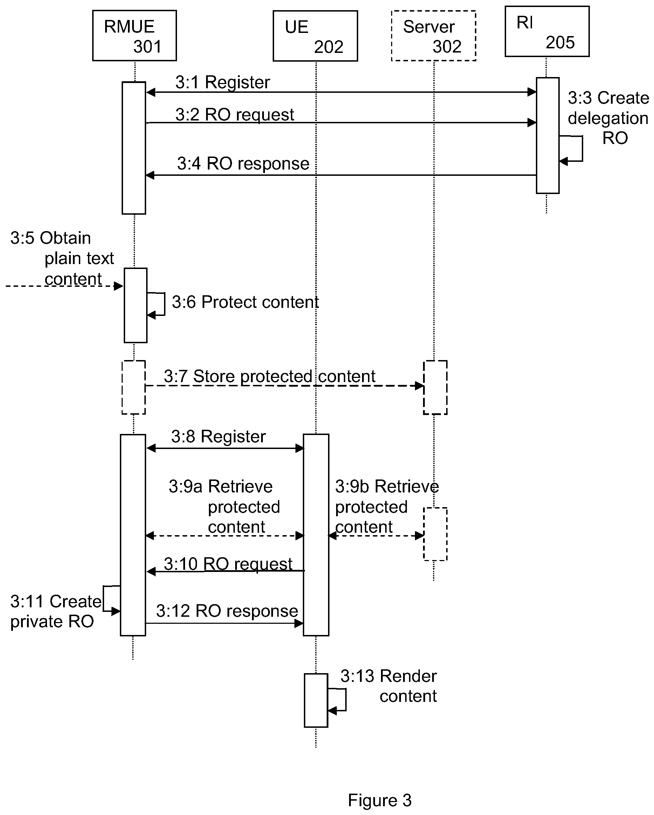

A private DRM protection mechanism which is based on an OMA DRM system, such as e.g. the OMA DRM version 2 system, according to one embodiment, will now be described with reference to the schematically illustrated signalling diagram of figure 3. Figure 3 shows a RMUE **301**, adapted to DRM protect private content according to a delegation RO, and a standards compliant UE **202**, on which the DRM protected private content may be rendered according to another RO, referred to as a private RO, issued by the RMUE, according to the delegation RO.

Initially, RMUE 301 has to locate an RI **205**, with which it can register as a delegate RI. With a delegate assertion, RMUE 301 will be able to prove to any standard compliant UE that it is allowed to DRM protect private content. Such a registration procedure is indicated with a first **step 3:1.**

The registration procedure typically includes a mutual authentication of the RI 205 and the RMUE 301, comprising in particular a verification of the certificate chain, authorizing the RMUE as a legitimate device, and typically also a check of the RMUE 301 against one or more blacklists maintained by the RI 205. The purpose of verifying a certificate chain is to verify a linked sequence of trust assertions starting with a trusted entity, in order to establish the legitimacy of the RI and the RMUE. Such an authentication procedure may be carried out, using a conventional authentication protocol, such as e.g. the OMA DRM ROAP Registration Protocol.

The registration procedure, according to the described embodiment, comprises the delivery of a public key certificate of RMUE, signed with the private key of RI, which is the delegate assertion in this embodiment, to the RMUE 301. The delegate assertion extends the RI certificate chain obtained by RMUE 301 from RI 205 with one linked step from RI 205 to RMUE 301, thus becoming a certificate chain for the RMUE as a RI. Hence any legacy UE will be able to verify the RMUE certificate chain and that the RMUE is a trusted RI.

In order to gain authorized rights to issue a private RO, RMUE 301 requests for a delegation RO, from RI 205. The delegation RO may be acquired e.g. by utilising the RO Request/Response protocol, as indicated with a next **step 3:2.** RI 205, approving the request, creates a delegation RO in a next **step 3:3**, and RI 205 responds with a RO response in a subsequent **step 3:4.** The delegation RO comprises a set of instructions, defining the authorized rights for the RMUE 301 to DRM protect private content and to create an associated private RO.

The delegation RO described in this embodiment is a RO compliant with a standardised DRM system in which the method is to be implemented, but possibly with new permissions, such as e.g. delegation, added to the Rights Expression Language, assuming an XML based RO, which is used to define the conditions under which a private RO may be created/generated at a RMUE. The authorized rights to produce DRM protected content and the use of such private DRM protected content given to different RMUEs may differ depending on a variety of circumstances, such as e.g. the registered user of the RMUE, time of the day, or any other criteria, specified by the RI issuing a delegate RO to the RMUE.

When a RMUE has been given the rights to control the access of private DRM protected content, a generating functionality for packing, encrypting and protecting content, performing the standard CI and RI tasks according to a given standard format, will be required at the RMUE. Packing, encryption and protection of discrete media in OMA DRM is typically done, using the DRM Content Format (DCF), while typically packetized DRM Content Format (PDCF) is used when protecting continuous media, such as e.g. audio or video.

Once RMUE 301 has gained rights to issue a private RO, private content for which DRM protection is required may be obtained, packed, encrypted and protected under supervision of the RMUE 301. These steps may be executed either in response to commands entered to the RMUE 301 by a user, or in response to an automatic content generating process of the RMUE 301, or as a combination thereof. In figure 3, such a procedure is indicated with a **step 3:5**, followed by a procedure for DRM protecting the obtained content, using a randomly generated content encryption key, according to the delegation RO, as indicated with another **step 3:6.**

DRM protected private content to be rendered by another RMUE or any conventional standard compliant UE does not have to be retrieved from the RMUE 301 which has issued the corresponding private RO. The DRM protected private content may e.g. have been distributed to an external destination, such as a Server **302**, subsequent to the DRM protection procedure, as indicated with the optional **step 3:7**, for later retrieval by another RMUE or UE. However, in order to be able to render the content retrieved from the RMUE 301 or from an external source, the UE 202 has to register with RMUE 301 and acquire relevant access rights, i.e. a private RO, and a delegate assertion from RMUE 301.

At a next **step 3:8**, UE 202 therefore registers with RMUE 301, wherein a RMUE certificate chain, comprising a delegate assertion, is provided to UE 202. The delegate assertion verifies that RMUE 301 is entitled to issue a private RO. In this registration procedure the RI certificate chain obtained by the RMUE 301 during the registration step 3:1 is extended with the certificate of RMUE, signed with the private key of RI, and, thus, no registration with RI 205 will be required for UE 202.

In a next **step 3:9a**, UE 202 acquires DRM protected content from RMUE 301. The protected content may be downloaded by, or streamed to UE 202, using any downloading or streaming mechanism which is supported by present standards. Alternatively, the protected content may be retrieved from an external source, e.g. from server 302, as indicated with an alternative **step 3:9b.**

Once the protected content has been acquired by UE 202, it requests a private RO from RMUE 301, as indicated in a **step 3:10.** In response to the RO request, RMUE 301 activates a routine for creating a private RO according to the delegation RO, retrieved in step 3:4. Such a procedure is indicated with a **step 3:11** in figure 3. In a subsequent **step 3:12,** the private RO, comprising a content encryption key, encrypted with a public key of UE 202, is transmitted to UE 202 in a RO response message.

In a typical scenario, the private RO will comprise a set of rules and constraints that has been defined by the delegation RO, in combination with rights which have been entered manually by a user of the RMUE 301, or generated automatically by a RO generating means of the RMUE 301, adapted for such a purpose. In a final **step 3:13**, UE 202 decrypts the encrypted content encryption key, using its private key, and renders the protected content, according to the private RO.

The RI may want to maintain some control of the usage of the delegation rights, e.g. for auditing and/or charging purposes. In case the right to become a delegate RI is expressed as a permission in a delegation RO and is enforced by a DRM agent in the RMUE, the RI may use some type of stateful rights such as e.g. counters and/or environment variables, measuring parameters, e.g. the number of times of usage, or other relevant constraints, for determining whether, or to what extent, to allow the RMUE to act as a delegate RI.

The standardised OMA DRM protocols mentioned above apply with the RMUE/delegate RI as an authorized RI, by using the extended RI certificate chain as a RMUE certificate chain, but requiring no changes in the DRM implementation in the standard compliant UEs, at which the protected content is to be rendered.

Although described with two separate procedures in the embodiment mentioned above, it is to be understood that, alternatively, the protected content and the associated private RO may instead be delivered together.

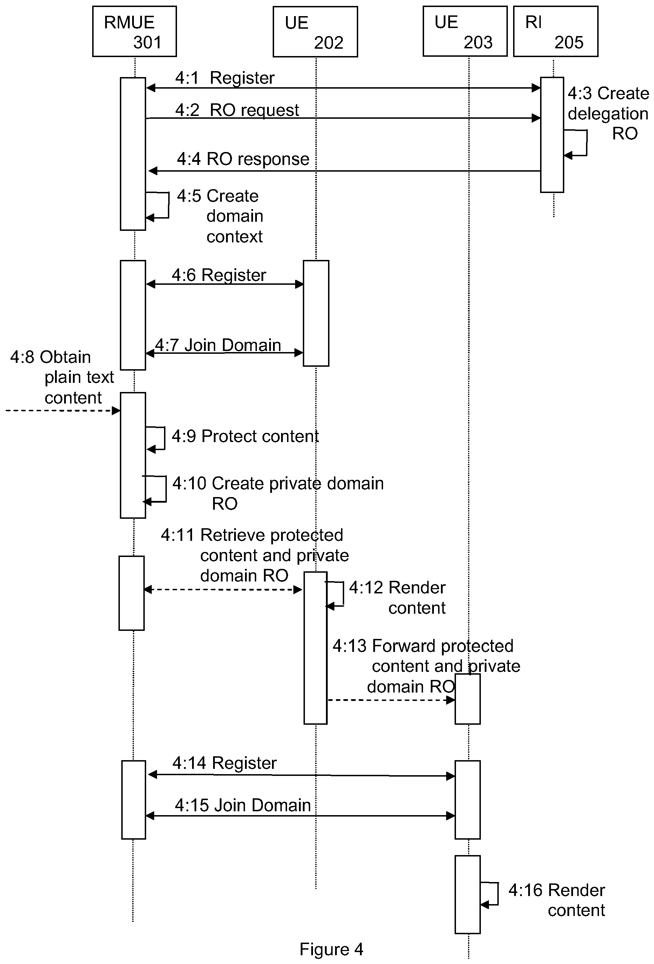

The embodiment described above enables a RMUE to specify private rights for a specific UE once it has been registered with the RMUE. If private rights created by a RMUE, are instead to be defined for a plurality of UEs, the domain concept, known from the OMA DRM standards, may instead be applied. A private DRM protection mechanism, according to another alternative embodiment, will therefore be described with reference to the signalling diagram of figure 4.

In resemblance to the embodiment of figure 3, also figure 4 illustrates a signalling procedure involving a RMUE **301**, a conventional UE **202** and a RI **205.** Although not indicated in the figure, it is to be understood that the Server solution mentioned in the former embodiment may be applicable also for the present embodiment.

According to this embodiment, a UE requiring to join a domain, will be able to address a RMUE, instead of a RI. Consequently, RMUE 301 will be provided with functionality necessary for creating the domain context, which will set out conditions for when and how a UE will be able to access DRM protected private content which has been protected by the RMUE 301.

In figure 4, the four first steps, i.e. **steps 4:1-step 4:4**, are comparable to the first four steps described in the methods described in the previous embodiment. In this embodiment, however, the RMUE 301 will be able to create a domain context once the RMUE 301 has received a delegation RO from RI 205. RMUE 301 creates the domain context D in a **step 4:5.** In a next **step 4:6**, UE 202 registers with RMUE 301, wherein the RMUE certificate chain, provided from RMUE 301 to UE 202, includes the delegate assertion. Subsequent to the registering procedure, UE 202 joins domain D, as indicated with another **step 4:7.**

Domain ROs to be shared with one or more UEs, enrolled in a domain, comprise the necessary cryptographic keys, protecting the content, and content encryption keys protected, using the domain key, as well as other, additional keys, for increasing the security. For this purpose, the RMUE 301 may be provided with dedicated generating functions, adapted to generate the DRM protected private content from content fed to, or generated by the RMUE, as well as to generate a private domain RO, associated with the respective DRM protected private content.

In a next **step 4:8**, RMUE 301 receives relevant content to be protected in plain text. In a subsequent **step 4:9**, the acquired content is DRM protected, using a content encryption key generated by the RMUE protected with the domain key according to the delegation RO, and in another **step 4:10**, RMUE 301 manages the creation of a private domain RO for domain D, within the limits set out by the delegation RO. As indicated in the former embodiment, the delegation RO is typically created in a combination of an automated procedure and instructions inserted to the RMUE via a conventional user interface.

When required, UE 202 retrieves the DRM protected content and the associated private domain RO from RMUE, as indicated with a **step 4:11.** Once retrieved, UE 202 will be able to render the protected content, according to the private domain RO and using the domain key for decrypting the content encryption key, as indicated with a next **step 4:12.**
The protected content may be forwarded further to another UE. In such a case, the protected content is forwarded together with the associated private domain RO, as indicated with a **step 4:13.** In order for UE 203 to be able to render the protected content, it has to be registered with RMUE 301. As indicated above, such a procedure comprises delivery of the RMUE certificate chain, including the delegate assertion of RMUE 301, to UE 203, as indicated with a next **step 4:14.** UE 203 also has to join domain D and acquire domain context for domain D from RMUE 301, as indicated with another **step 4:15.** At this stage, UE 203 will be able to decrypt and render the protected content, according to the private domain RO, as indicated with a final **step 4:16.**

It is to be understood that also for the embodiments describing domains the standardized OMA DRM protocols apply with the RMUE/delegate RI as RI, applying an extended RI certificate chain. Thereby, the suggested DRM implementations will be achievable without requiring any changes to be made in the rendering UEs. As previously remarked, the protocol used for joining a domain, e.g. the domain join protocol, may be associated with some additional authentication and authorization procedure, e.g. a user login and associated settings, allowing the RMUE/delegate RI to determine if these UE's should be allowed to join the domain if desired due to security requirements.

A UE joining a domain, as described in the embodiment above, is using the standard OMA DRM protocols with the RMUE/RI delegate. One advantage with doing so is that the available client implementations of OMA DRM can be reused. On the other hand this means that the RMUE must implement the server side, e.g. the ROAP protocols, for registration and domain management, and furthermore it has to be available online for registration, using e.g. ROAP registration and RO requests, using e.g. the RO request/response protocol. This may be easily fulfilled if the RMUE is a stationary device, such as e.g. a community server, administrating the rights of the community by receiving clear text content from community members, protecting content and associate domain ROs for protected rendering on legitimate devices. However, these properties may be less feasible to implement on a mobile or wireless RMUE. In alternative embodiments we therefore introduce some minor changes to the OMA DRM standard, which will enable all compliant devices with the rights management functionality described in this invention to obtain rights issuer rights.

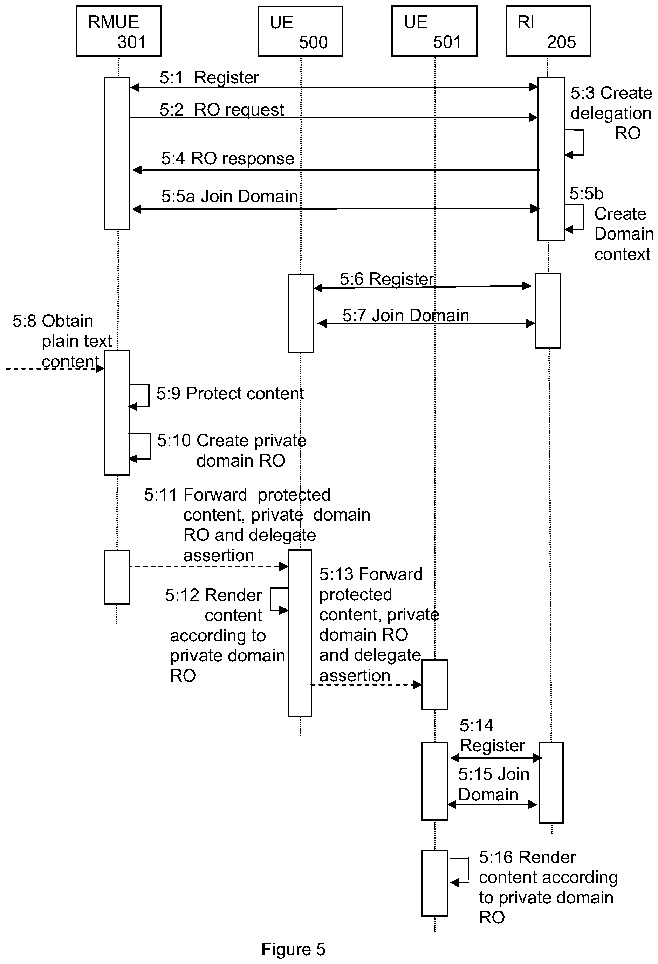

In one alternative embodiment, registration of a UE and joining a domain is performed between UE and a RI, instead of with the RMUE. Thereby, the RMUE does not have to comprise this type of server functionality. Figure 5 illustrates a signalling scheme, where the registration procedure and the procedure to request for and retrieve a delegation RO from RI 205, as indicated with **steps 5:1-5:4**, are comparable to the corresponding steps in figure 4.

In a next **step 5:5a**, however, RMUE initiates a creation of a domain, domain E, and receives a domain context for domain E, typically by utilising the Join Domain protocol. The domain context is created at RI 205 in a **step 5:5b**, using the Join Domain protocol.

In a **step 5:6** a UE **500** registers with RI 205, and in a next **step 5:7**, UE 500 joins domain E in a signalling procedure established with RI 205, typically by utilising the Join Domain protocol. UE 500 is now prepared to render content protected under supervision of RMUE 301.

In another **step 5:8** RMUE 301 obtains plain text content which is to be DRM protected at the RMUE 301. In a subsequent **step 5:9**, the content is DRM protected according to the delegation RO and using a generated content encryption key, and in a next **step 5:10** a private domain RO for domain E is created at RMUE 301, in a similar manner as described for the preceding embodiments. In yet another **step 5:11**, the DRM protected content is forwarded to UE 500, together with the private domain RO and the delegate assertion. The UE 500 has now joined a domain E, created by the RI 205, and has received a Domain RO for this domain, created by the RMUE 301. In standard OMA DRM v2, it would not be allowed to process such an RO, since the signature of the RO is not made by the RI that has generated the domain E. We here allow the following deviation from the standard: Domain ROs may be signed not only by the RI, creating the domain, but also by delegate RIs with a valid delegate assertion. Since UE 500 receives the delegate assertion with the content and private domain RO in step 5:11, the UE 500 can verify the relation between the signature on the private domain RO, the delegate assertion and the RI and conclude that this is a legitimate RO.

In a **step 5:12**, UE 500 decrypts in turn the content encryption key and the content and renders the protected content according to the private domain RO, and UE 500 can select to forward the protected content, the restriction domain RO and the delegate assertion further to yet another UE **501**, as indicated in another **step 5:13.**

In order for UE 501 to be able to render the protected content it too will have to register with RI 205, as indicated with a **step 5:14**, as well as to join domain E, as indicated with another **step 5:15.** When these procedures have been completed, UE 501 may choose to decrypt and render the content according to the restriction domain RO, as indicated with a final **step 5:16.**

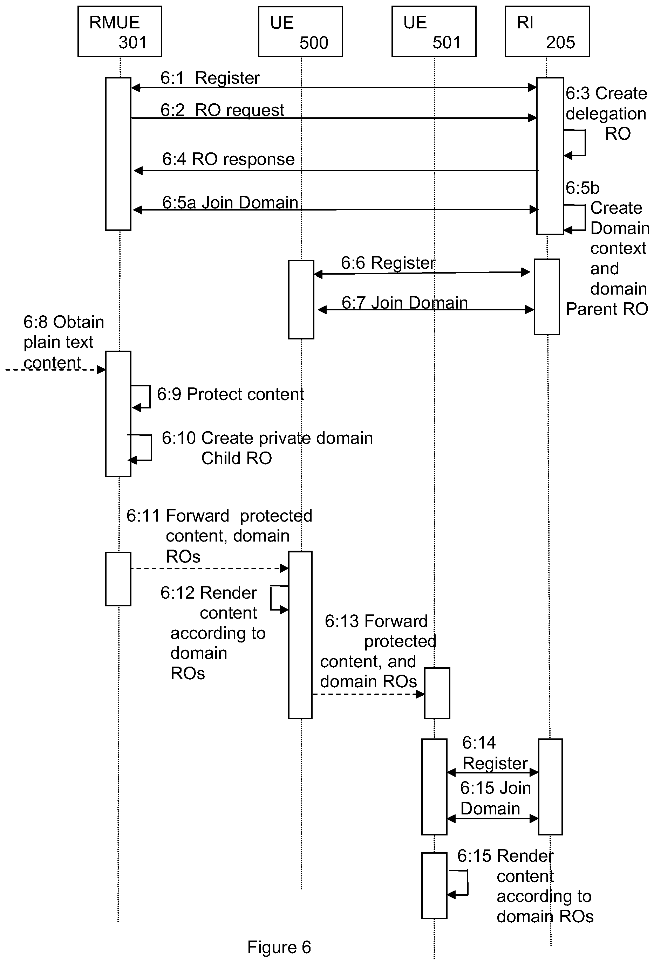

According to yet another alternative embodiment which will now be described with reference to the signalling scheme of figure 6, the OMA DRM standard is modified such that domain parent and domain child ROs are applied, wherein the domain parent and the domain child RO can have different RI signatures.

In OMA DRM, an RO may inherit permissions from another RO, using an inheritage syntax. This mechanism can be used, for example, to specify a right for content acquired as part of a subscription, and applies both to device and domain ROs, while an RO that inherits permissions is referred to as a *child RO* (C-RO). An RO that contains the permissions that are inherited is referred to as a *parent RO* (P-RO). A P-RO generally does not reference any DRM content directly, so both a P-RO and a C-RO are needed to render content protected using this mechanism.

With this modification of the OMA DRM v2 standard, the parent RO could act as a delegation assertion, containing the public key of the RI delegate and being signed by the RI, with the added semantics that the child RO can be signed by any RI delegate, or by the RI itself. Just as in the previous embodiment there is no need for an RI delegate, i.e. a RMUE, to implement the RI registration and join domain functionality, and both RMUEs, and rendering UEs can join the same RI generated domain, by registering with the RI.

A registration procedure and a procedure for requiring a domain delegation RO from RI 205, both comparable to the corresponding procedures executed in steps 5:1-5:4 of figure 5, are performed in the initial **steps 6:1-6:4** of figure 6. In subsequent **steps 6:5a** and **6:5b**, a domain F is created and the domain context is provided to RMUE 301. A difference from the previously described domain related embodiments is that the domain context associated with domain F, will comprise domain context for domain F, and a domain parent RO.

In a next **step 6:6** a UE 500 registers with RI 205 and in a subsequent **step 6:7** UE 500 joins domain F, in a similar manner as was described in the previous embodiment.

In another **step 6:8** RMUE obtains content to be protected, and in a **step 6:9**, this content is DRM protected according to the delegation RO. In a subsequent **step 6:10** a private domain child RO is created according to the rules and restraints specified in the delegation RO. In a next **step 6:11,** RMUE 301 transmits the DRM protected content, together with the domain parent RO and the private domain child RO, to UE 500, where the protected content is rendered, according to the parent and child domain ROs. The UE 500 now have joined a domain F, created by the RI 205, and have received a parent and child domain RO, created by different entities, i.e. the parent RO, created by the RI and the child RO, created by the RMUE. In standard OMA DRM v2, it would not be allowed to process such an RO. We here allow the following deviation from the standard: Child ROs may be signed not only by the RI creating the domain and the parent RO, but also by delegate RIs with a valid delegate assertion. Since UE 500 receives the delegate assertion with the content and Domain RO in step 6:11, the UE 500 can verify the relation between the signature on the parent and child domain RO, the delegate assertion and the RI and conclude that this is a legitimate Rights Object. In a **step 6:12**, the protected content is rendered accordingly.

UE 500 may choose to forward the protected content and both domain ROs further to another UE **501**, decrypting the content encryption key, using the domain key, as indicated with a **step 6:13.** In order to render the content, UE 501 then registers with RI, as indicated with a **step 6:14**, and joins domain F, as indicated with another **step 6:15.** In a final **step 6:16**, the content is decrypted and rendered at the UE 501, according to the domain ROs.

There are two minor variants of this embodiment with explicit delegate assertion as described above, or where the parent RO includes the public key of the RMUE and hence the parent RO constitutes a delegate assertion.

A UE, i.e. a RMUE, adapted to operate in accordance with any of the embodiments described above will now be schematically presented with reference to figure 7. It is to be understood that the RMUE described in this document also comprise additional conventional means providing functionality, necessary for enabling common UE functions and features to operate properly. However, for simplicity reasons, any means or functionality which is not necessary for the understanding of the proposed DRM protection mechanism for private content has been omitted in the figure, and will not be discussed in any further detail in this presentation.

The RMUE **700** comprises a DRM agent **701**, configured to manage DRM functionality according to the OMA DRM standards. RMUE 700 also comprises a generic device **702**, provided with additional functionality, enabling a user of RMUE 700 to DRM protect private content which may have been provided to the RMUE 700 from an external source, or generated by the RMUE 700 itself, and to create private ROs, associated with the DRM protected private content, according to any of the embodiments described above. The device 702 may be implemented at the RMUE 700 as a separate unit which is adapted to interact with the DRM agent, or as a unit which is integrated with the conventional DRM agent 701.

The suggested generating functionality may be implemented in a combined private content and rights generating (PCRG) unit 703a. Alternatively, the PCRG is configured as two separate units, comprising functionality adapted to operate in cooperation with the DRM agent 701. If the PCRG is implemented as separate units, a Private Content Protection Function (PCPF) **703b**, is typically adapted to DRM protect content which has been obtained in plain text by the UE 700, while a Private Rights Generation Function (PRGF) **703c,** is configured to create private rights as a private RO. The RMUE 700 may also comprise additional functions, implemented as generic units which are configured to interact with the DRM agent 701.If the RMUE 700 is to be able to create domains, the RMUE will comprise functionality adapted for this purpose. Such a unit, here referred to as a Domain Generating Function (DGF) **704**, is adapted to generate the required domain context, while the device is adapted to enrol another user equipment in a domain associated with the domain context. If the RMUE 700 is to be able to act as a registering server, it also has to comprise such registration functionality. A registering Function (RF) **705**, may be adapted to perform registrations of a second user equipment, wherein the RF is adapted to provide a delegation assertion to the second user equipment as part of a registration procedure between RMUE 700 and the second user equipment.

If, however, the domains are instead only to be created by an RI and/or if standards compliant UEs are to register with an RI, instead of with the RMUE 700, no such functionality will be necessary in the RMUE. The RMUE 700 also comprises a Rights Management Interface (RMI) **706**, for handling the plain text content to be protected and rights specifying the DRM protection and the creation of private ROs, as well as a conventional communication unit 707.

## Claims

1. A method of enabling Digital Rights Management, DRM, of content in a communications network supporting a DRM system, said method comprising the following steps to be performed by a first user equipment (301):
- registering said first user equipment (301) with a first rights issuer (205) of the DRM system, by retrieving a delegate assertion from said first rights issuer (205), said delegate assertion is a public key certificate of said first user equipment (301), signed by said first rights issuer (205) with a private key of said first rights issuer (205), for authorizing the first user equipment (301) to become a private rights issuer of the DRM system,
- retrieving a first rights object from said first rights issuer (205), wherein said first rights object, being signed by the first rights issuer (205), comprises a first set of rights for said first user equipment (301), and
- applying DRM protection on private content, according to at least the first set of rights, **characterized in that** the method further comprises:
- creating, by said first user equipment (301), a second rights object according to at least the first set of rights in combination with predetermined rights being entered by said first user equipment (301), said second rights object defining a second set of rights for rendering the private content, and
- transmitting, by said first user equipment (301), said second rights object to a second user equipment (202, 500), wherein said second user equipment (202, 500) is able to render said private content on the basis of at least said second rights object upon having acquired the private content and the delegate assertion.

2. The method according to claim 1, further comprising the step of:
- performing a registration of the second user equipment (202, 500), wherein the delegate assertion is provided to said second user equipment (202, 500) as part of said registration procedure.

3. The method according to claim 1, further comprising the step of:
- requesting a domain context from the first rights issuer (205), said domain context specifying rules for rendering of protected content by said second user equipment (202, 500) enrolled being in a domain specified by said domain context.

4. The method according to claim 3, wherein said domain is managed by said first rights issuer (205).

5. The method according to claim 1 or 2, further comprising the step of:
- generating a domain context, enrolling the second user equipment (202, 500) in a domain associated with said domain context, said domain context specifying rules for the rendering of the protected content by said second user equipment (202, 500).

6. The method according to claim 3, wherein the second rights object is an OMA DRM domain child rights object and a corresponding domain parent rights object is signed by the first rights object.

7. The method according to claim 6, wherein the delegate assertion is the corresponding parent rights object, said parent rights object comprising the public key of the first rights issuer (205).

8. The method according to any of the preceding claims, wherein the DRM system is an OMA DRM system.

9. A first user equipment for handling Digital Rights Management, DRM, protected content in a communication network supporting a DRM system, said first user equipment (301) comprising:
- a DRM agent (701) for registering with a first rights issuer (205) of the DRM system and for retrieving a delegate assertion and a first rights object from said first rights issuer (205), said delegate assertion is a public key certificate of said first user equipment (301), signed by said first rights issuer (205) with a private key of said first rights issuer (205), for authorizing the first user equipment (301) to become a private rights issuer of the DRM system, and said first rights object, being signed by the first rights issuer (205), comprising a first set of rights for said first user equipment (301) to DRM protect private content and to create at least one second rights object associated with said private content,
**characterized in that** said first user equipment (301) further comprises:
- a generating unit (703a) for creating a second rights object according to at least the first set of rights in combination with predetermined rights being entered by said first user equipment (301), said second rights object defining a second set of rights for rendering the private content, and
- a communication unit (707) for transmitting said second rights object to a second user equipment (202, 500), said second user equipment (202, 500) being able to render said private content on the basis of at least said second rights object upon having acquired the private content and the delegate assertion.

10. The first user equipment (301) according to claim 9, further comprising a device (702) that comprises:
- a Registering Function (705) for performing a registration of the second user equipment (202, 500), wherein the delegate assertion is provided to said second user equipment (202, 500) as part of said registration procedure.

11. The first user equipment (301) according to claims 9 and 10, wherein said device (702) is adapted to request a domain context from the first rights issuer (205), said domain context specifying rights for rendering of protected content by a second user equipment (202, 500) enrolled in a domain specified by said domain context.

12. The first user equipment (301) according to any of claims 9-10, wherein said device (702) further comprises:
- a Domain Generating Function (704) for generating a domain context, wherein said device (702) is further adapted to enroll the second user equipment (202, 500) in a domain associated with said domain context, said domain context specifying rules for the rendering of the protected content by said second user equipment (202, 500).

13. The first user equipment (301) according to any of claims 9-12, wherein said first user equipment (301) is compliant to OMA DRM version 1 and/or 2 standards.

## Patentansprüche

1. Verfahren zum Freigeben digitaler Rechteverwaltung, DRM (digital rights management), von Inhalt in einem Kommunikationsnetzwerk, das ein DRM-System unterstützt, wobei das Verfahren die nachstehenden von einem ersten Nutzergerät (301) auszuführenden Schritte umfasst:
- Registrieren des ersten Nutzergeräts (301) bei einem Ausgeber eines ersten Rechts (205) des DRM-Systems durch Wiederherstellen einer Delegations-Assertion von dem Ausgeber eines ersten Rechts (205), wobei die Delegations-Assertion eine Public-Key-Zertifizierung des ersten Nutzergeräts (301) ist, die durch den Ausgeber eines ersten Rechts (205) mit einem Private-Key des Ausgebers eines ersten Rechts (205) unterzeichnet ist, um das erste Nutzergerät (301) dazu zu autorisieren, ein Ausgeber eines privaten Rechts des DRM-Systems zu werden,
- Wiederherstellen eines ersten Rechtsobjekts von dem Ausgeber eines ersten Rechts (205), wobei das erste Rechtsobjekt, das durch den Ausgeber eines ersten Rechts (205) unterzeichnet ist, einen ersten Satz Rechte für das erste Nutzergerät (301) umfasst, und
- Anwenden von DRM-Schutz auf privaten Inhalt nach mindestens dem ersten Satz Rechte, **dadurch gekennzeichnet, dass** das Verfahren ferner umfasst:
- Erzeugen eines zweiten Rechtsobjekts durch das erste Nutzergerät (301) nach mindestens dem ersten Satz Rechte in Kombination mit durch das erste Nutzergerät (301) eingegebenen vorbestimmten Rechten, wobei das zweite Rechtsobjekt einen zweiten Satz Rechte zum Ausgeben des privaten Inhalts definiert, und
- Übertragen des zweiten Rechtsobjekts durch das erste Nutzergerät (301) an ein zweites Nutzergerät (202, 500), wobei das zweite Nutzergerät (202, 500) in der Lage ist, den privaten Inhalt nach Aufnehmen des privaten Inhalts und der Delegations-Assertion auf Grundlage von mindestens dem zweiten Rechtsobjekt auszugeben.

2. Verfahren nach Anspruch 1, ferner den folgenden Schritt umfassend:
- Durchführen einer Registrierung des zweiten Nutzergeräts (202, 500), wobei die Delegations-Assertion dem zweiten Nutzergerät (202, 500) als Teil der Registrierungsvorgehensweise bereitgestellt wird.

3. Verfahren nach Anspruch 1, ferner den folgenden Schritt umfassend:
- Abfragen eines Domänenkontexts von dem Ausgeber eines ersten Rechts (205), wobei der Domänenkontext Regeln zum Ausgeben von geschütztem Inhalt durch das zweite Nutzergerät (202, 500) spezifiziert, das in einer durch den Domänenkontext spezifizierten Domäne registriert ist.

4. Verfahren nach Anspruch 3, wobei die Domäne durch den Ausgeber eines ersten Rechts (205) gehandhabt wird.

5. Verfahren nach Anspruch 1 oder 2, ferner den folgenden Schritt umfassend:
- Erzeugen eines Domänenkontexts, Registrieren des zweiten Nutzergeräts (202, 500) in einer dem Domänenkontext zugeordneten Domäne, wobei der Domänenkontext Regeln zum Ausgeben des geschützten Inhalts durch das zweite Nutzergerät (202, 500) spezifiziert.

6. Verfahren nach Anspruch 3, wobei das zweite Rechtsobjekt ein untergeordnetes OMA-DRM-Domänen-Rechtsobjekt ist und ein entsprechend übergeordnetes Domänen-Rechtsobjekt durch das erste Rechtsobjekt unterzeichnet wird.

7. Verfahren nach Anspruch 6, wobei die Delegations-Assertion das entsprechend übergeordnete Rechtsobjekt ist, wobei das übergeordnete Rechtsobjekt den Public-Key des Ausgebers eines ersten Rechts (205) umfasst.

8. Verfahren nach einem der vorstehenden Ansprüche, wobei das DRM-System ein OMA DRM-System ist.

9. Erstes Nutzergerät zum Handhaben von mit digitaler Rechteverwaltung, DRM, geschütztem Inhalt in einem Kommunikationsnetzwerk, das ein DRM-System unterstützt, wobei das erste Nutzergerät (301)umfasst:
- einen DRM-Agent (701) zum Registrieren des DRM-Systems bei einem Ausgeber eines ersten Rechts (205) und zum Wiederherstellen einer Delegations-Assertion und eines ersten Rechtsobjekts von dem Ausgeber eines ersten Rechts (205), wobei die Delegations-Assertion eine Public-Key-Zertifizierung des ersten Nutzergeräts (301) ist, die durch den Ausgeber eines ersten Rechts (205) mit einem Private-Key des Ausgebers eines ersten Rechts (205) unterzeichnet ist, um zu autorisieren, dass das erste Nutzergerät (301) ein Ausgeber eines privaten Rechts des DRM-Systems wird, und wobei das erste Rechtsobjekt, durch den Ausgeber eines ersten Rechts (205) unterzeichnet wird, umfassend einen ersten Satz von Rechten, damit das erste Nutzergerät (301) den privaten Inhalt DRM-schützen kann und um mindestens ein zweites Rechtsobjekt zu erzeugen, das dem privaten Inhalt zugeordnet ist, **dadurch gekennzeichnet, dass** das erste Nutzergerät (301) ferner umfasst:
- eine Erzeugungseinheit (703a) zum Erzeugen eines zweiten Rechtsobjekts nach mindestens dem ersten Satz Rechte in Kombination mit vorbestimmten Rechten, die durch das erste Nutzergerät (301) eingegeben werden, wobei das zweite Rechtsobjekt einen zweiten Satz Rechte für den privaten Inhalt definiert, und
- eine Kommunikationseinheit (707) zum Übertragen des zweiten Rechtsobjekts an ein zweites Nutzergerät (202, 500), wobei das zweite Nutzergerät (202, 500) in der Lage ist, den privaten Inhalt auf Grundlage dessen auszugeben, dass das mindestens zweite Rechtsobjekt den privaten Inhalt und die Delegations-Assertion aufgenommen hat.

10. Erstes Nutzergerät (301) nach Anspruch 9, ferner umfassend eine Vorrichtung (702), die umfasst:
- eine Registrierungsfunktion (705) zum Durchführen einer Registrierung des zweiten Nutzergeräts (202, 500), wobei die Delegations-Assertion dem zweiten Nutzergerät (202, 500) als Teil der Registrierungsverfahrensweise bereitgestellt wird.

11. Erstes Nutzergerät (301) nach Ansprüchen 9 und 10, wobei die Vorrichtung (702) angepasst ist, um einen Domänenkontext von dem Ausgeber eines ersten Rechts (205) abzufragen, wobei der Domänenkontext Rechte zum Ausgeben von geschütztem Inhalt durch ein zweites Nutzergerät (202, 500) spezifiziert, das in einer durch den Domäneninhalt spezifizierten Domäne registriert ist.

12. Erstes Nutzergerät (301) nach einem der Ansprüche 9-10, wobei die Vorrichtung (702) ferner umfasst:
- eine Domänenerzeugungsfunktion (704) zum Erzeugen eines Domänenkontexts, wobei die Vorrichtung (702) ferner angepasst ist, um das zweite Nutzergerät (202, 500) in einer dem Domänenkontext zugeordneten Domäne zu registrieren, wobei der Domänenkontext Regeln zum Ausgeben des geschützten Inhalts durch das zweite Nutzergerät (202, 500) spezifiziert.

13. Erstes Nutzergerät (301) nach einem der Ansprüche 9-12, wobei das erste Nutzergerät (301) standardkonform mit OMA DRM-Version 1 und/oder 2 ist.

## Revendications

1. Procédé d'activation de la gestion des droits numériques, DRM, de contenus dans un réseau de communication soutenant un système DRM, ledit procédé comprenant les étapes suivantes devant être effectuées par l'équipement d'un premier utilisateur (301) consistant à :
- enregistrer ledit équipement d'un premier utilisateur (301) auprès d'un premier émetteur de droits (205) du système DRM, en récupérant une assertion déléguée dudit premier émetteur de droits (205), ladite assertion déléguée étant un certificat de clé publique dudit équipement d'un premier utilisateur (301), signée par ledit premier émetteur de droits (205) avec une clé privée dudit premier émetteur de droits (205), pour autoriser l'équipement d'un premier utilisateur (301) à devenir un émetteur de droits privé du système DRM,
- récupérer un premier objet de droits dudit premier émetteur de droits (205), dans lequel ledit premier objet de droits, étant signé par le premier émetteur de droits (205), comprend un premier ensemble de droits pour ledit équipement d'un premier utilisateur (301), et
- appliquer une protection **DRM** sur un contenu privé, selon au moins le premier ensemble de droits, **caractérisé en ce que** le procédé comprend en outre :
- la création, par ledit équipement d'un premier utilisateur (301), d'un second objet de droits selon au moins le premier ensemble de droits en combinaison avec des droits prédéterminés étant saisis par ledit équipement d'un premier utilisateur (301), ledit second objet de droits définissant un second ensemble de droits pour restituer le contenu privé, et
- la transmission, par ledit équipement d'un premier utilisateur (301), dudit second objet de droits à l'équipement d'un second utilisateur (202, 500), dans lequel ledit équipement d'un second utilisateur (202, 500) est capable de restituer ledit contenu privé en fonction d'au moins ledit second objet de droits après avoir acquis le contenu privé et l'assertion déléguée.

2. Procédé selon la revendication 1, comprenant en outre l'étape consistant à :
- effectuer un enregistrement de l'équipement du second utilisateur (202, 500), dans lequel l'assertion déléguée est fournie audit équipement du second utilisateur (202, 500) en tant que partie de ladite procédure d'enregistrement.

3. Procédé selon la revendication 1, comprenant en outre l'étape consistant à :
- demander un contexte de domaine au premier émetteur de droits (205), ledit contexte de domaine spécifiant des règles pour le rendu de contenus protégés par ledit équipement du second utilisateur (202, 500) inscrit se trouvant dans un domaine spécifié par ledit contexte de domaine.

4. Procédé selon la revendication 3, dans lequel ledit domaine est géré par ledit premier émetteur de droits (205).

5. Procédé selon la revendication 1 ou 2, comprenant en outre l'étape consistant à :
- générer un contexte de domaine, en inscrivant l'équipement du second utilisateur (202, 500) dans un domaine associé audit contexte de domaine, ledit contexte de domaine spécifiant des règles pour le rendu des contenus protégés par ledit équipement du second utilisateur (202, 500).

6. Procédé selon la revendication 3, dans lequel le second objet de droits est un objet de droits enfant de domaine OMA DRM et un objet de droits parent de domaine correspondant est signé par le premier objet de droits.

7. Procédé selon la revendication 6, dans lequel l'assertion déléguée est l'objet de droits parent correspondant, ledit objet de droits parent comprenant la clé publique du premier émetteur de droits (205).

8. Procédé selon l'une quelconque des revendications précédentes, dans lequel le système DRM est un système OMA DRM.

9. Équipement d'un premier utilisateur pour traiter un contenu protégé par gestion de droits numériques, DRM, dans un réseau de communication soutenant un système DRM, ledit équipement d'un premier utilisateur (301) comprenant :
- un agent DRM (701) pour s'enregistrer auprès d'un premier émetteur de droits (205) du système DRM et pour récupérer une assertion déléguée et un premier objet de droits dudit premier émetteur de droits (205), ladite assertion déléguée étant un certificat de clé publique dudit équipement d'un premier utilisateur (301), signé par ledit premier émetteur de droits (205) avec une clé privée dudit premier émetteur de droits (205), pour autoriser l'équipement d'un premier utilisateur (301) à devenir un émetteur de droits privé du système DRM, et ledit premier objet de droits, étant signé par le premier émetteur de droits (205), comprenant un premier ensemble de droits pour ledit équipement d'un premier utilisateur (301) afin de protéger le contenu privé du DRM et de créer au moins un second objet de droits associé audit contenu privé, **caractérisé en ce que** ledit équipement d'un premier utilisateur (301) comprend en outre :
- une unité de génération (703a) pour créer un second objet de droits en fonction d'au moins le premier ensemble de droits en combinaison avec des droits prédéterminés saisis par ledit équipement d'un premier utilisateur (301), ledit second objet de droits définissant un second ensemble de droits pour restituer le contenu privé, et
- une unité de communication (707) pour transmettre ledit second objet de droits à l'équipement d'un second utilisateur (202, 500), ledit équipement d'un second utilisateur (202, 500) étant capable de restituer ledit contenu privé en fonction d'au moins ledit second objet de droits après avoir acquis le contenu privé et l'assertion déléguée.

10. Équipement d'un premier utilisateur (301) selon la revendication 9, comprenant en outre un dispositif (702) qui comprend :
- une fonction d'enregistrement (705) pour effectuer un enregistrement de l'équipement du second utilisateur (202, 500), dans lequel l'assertion déléguée est fournie audit équipement du second utilisateur (202, 500) en tant que partie de ladite procédure d'enregistrement.

11. Équipement d'un premier utilisateur (301) selon les revendications 9 et 10, dans lequel ledit dispositif (702) est adapté pour demander un contexte de domaine au premier émetteur de droits (205), ledit contexte de domaine spécifiant des droits pour le rendu de contenus protégés par l'équipement d'un second utilisateur (202, 500) inscrit dans un domaine spécifié par ledit contexte de domaine.

12. Équipement d'un premier utilisateur (301) selon l'une quelconque des revendications 9 à 10, dans lequel ledit dispositif (702) comprend en outre :
- une fonction de génération de domaine (704) pour générer un contexte de domaine, dans lequel ledit dispositif (702) est en outre adapté pour inscrire l'équipement du second utilisateur (202, 500) dans un domaine associé audit contexte de domaine, ledit contexte de domaine spécifiant des règles pour le rendu du contenu protégé par ledit équipement du second utilisateur (202, 500).

13. Équipement d'un premier utilisateur (301) selon l'une quelconque des revendications 9 à 12, dans lequel ledit équipement d'un premier utilisateur (301) est conforme aux normes OMA DRM version 1 et/ou 2.
